Europäisches Patentamt

European Patent Office

Office européen des brevets

(19)

(11) Veröffentlichungsnummer: **0 146 753**
**B1**

## (12) EUROPÄISCHE PATENTSCHRIFT

(45) Veröffentlichungstag der Patentschrift:
24.06.87

(21) Anmeldenummer: 84113557.7

(22) Anmeldetag: 09.11.84

(51) Int. Cl.⁴: **B 29 C 65/08**

(54) Verfahren und Vorrichtung zum Befestigen von Einbauteilen in Hohlkörpern aus thermoplastischen Kunststoffen.

(30) Priorität: 18.11.83 DE 3341697

(43) Veröffentlichungstag der Anmeldung:
03.07.85 Patentblatt 85/27

(45) Bekanntmachung des Hinweises auf die Patenterteilung:
24.06.87 Patentblatt 87/26

(84) Benannte Vertragsstaaten:
DE FR GB IT NL SE

(56) Entgegenhaltungen:
DE - A - 2 338 908
DE - A - 2 826 116
US - A - 3 669 780

(73) Patentinhaber: BASF Aktiengesellschaft,
Carl-Bosch-Strasse 38, D-6700 Ludwigshafen (DE)

(72) Erfinder: Buehrle, Hans, An der Froschlache 23,
D-6700 Ludwigshafen (DE)
Erfinder: Lindner, Edmund, Edenkobener Strasse 9,
D-6700 Ludwigshafen (DE)
Erfinder: Lohrbaecher, Volker, Kisslichstrasse 1,
D-6940 Weinheim (DE)
Erfinder: Jung, Norbert, Europa-Ring 18,
D-6840 Lampertheim 1 (DE)

## Beschreibung

Die Erfindung bezieht sich auf ein Verfahren zum Befestigen von Einbauteilen in Hohlkörpern aus thermoplastischen Kunststoffen nach dem Oberbegriff des Patentanspruchs 1 sowie auf eine Vorrichtung zur Durchführung des Verfahrens.

Bei relativ grossen Flüssigkeitsbehältern, beispielsweise Kraftstofftanks, ist es erforderlich, im Innenraum Einbauteile anzuordnen, mit denen die Behälter versteift und die bei Ihrem Transport entstehenden hydrodynamischen Kräfte der schwallenden Flüssigkeit zumindest teilweise kompensiert werden.

Es ist bekannt, Einbauteile, wie Schwall- oder Schlingerwände bzw. Schotts, in einen nach dem Hohlkörperblasverfahren hergestellten Behälter dadurch einzubringen, dass ein warmplastischer, aus einer Ringdüse austretender schlauchförmiger Vorformling über das auf einer Haltevorrichtung sitzende vorgefertigte Einbauteil gefahren und anschliessend von einer Blasform umschlossen und durch ein Druckmedium aufgeweitet wird. Der Vorformling legt sich dabei an die Innenwände der ihn umschliessenden Blasform an, wo er abkühlt und erstarrt. Bei diesem Vorgang verbindet sich das ebenfalls aus thermoplastischem Kunststoff bestehende Einbauteil mit den es berührenden, noch warmen Partien der Behälterwände. Nachteilig an diesem Verfahren ist jedoch, dass der Vorformling auf die Grösse des darin aufzunehmenden Einbauteils abgestimmt sein muss und keine Freizügigkeit in der Wahl seiner für die Formung des Behälters optimalen Abmessungen erlaubt.

Weiterhin wurde gemäss der DE-A-2 338 908, von der zur Darstellung der Erfindungs-Gattung im Oberbegriff des Anspruchs 1 ausgegangen ist, auch schon vorgeschlagen, in Kunststoffbehälter Einbauteile, insbesondere Giessstutzen einzubringen und diese mittels Ultraschallenergie an der Behälterinnenwand zu befestigen. Dabei wird an einer Öffnung des Behälters ein Ultraschallkopf (Sonotrode) einer Ultraschall-Schweisseinrichtung zum einen gegen das Einbauteil und die die Öffnung enthaltende Behälterwand und zum anderen zusammen mit dem Behälter gegen einen auf der Behälter-Aussenseite liegenden zweiteiligen Amboss gedrückt und so eine Schweissverbindung herbeigeführt. Nach diesem Verfahren kann das Einbauteil zwar mit der an die Öffnung unmittelbar angrenzenden Behälterwand, nicht aber mit anderen, d.h. seitlichen Behälterwänden verbunden werden.

Der Erfindung liegt nun die Aufgabe zugrunde, das Befestigen von Einbauteilen in Hohlkörpern noch zu verbessern und insbesondere eine grössere Flexibilität bei der Konstruktion der Hohlkörper und der Einbauteile zu ermöglichen.

Diese Aufgabe wird grundsätzlich dadurch gelöst, dass die Einbauteile vom Kopf eines Schweissambosses in der Schweissposition gehalten und die Schweissverbindungen durch zwei oder mehrere von aussen über verschiedene Wände des Hohlkörpers gegen den innenliegenden Amboss wirkende Schweisssonotroden hergestellt werden. Hierdurch kann ein Einbauteil mit mehreren Wänden eines Hohlkörpers verschweisst werden. Eine weitere Verbesserung in diesem Sinne lässt sich dadurch erreichen, dass die Einbauteile auf den Kopf des Schweissambosses aufgesetzt und zusammen mit dem Amboss in den Hohlkörper eingebracht und in Schweissposition verschoben werden.

Bei dem neuen Verfahren werden die Einbauteile vor oder nach der endgültigen Formgebung der Hohlkörper in diese eingebracht und unter leichtem Andrücken, wobei im allgemeinen ein Druck von 1 bis 12 bar ausreicht, der Einwirkung von Ultraschallenergie ausgesetzt. Dabei können Ultraschallgeräte mit den üblichen Sonotroden, die beispielsweise aus Titan oder Titanlegierungen hergestellt sein können, verwendet werden. Der Frequenzbereich liegt im allgemeinen zwischen 10 und 30, vorzugsweise zwischen 18 und 25 kHz; der Amplitudenbereich zwischen 20 bis 40, gegebenenfalls zwischen 5 und 60 μm. Das Verschweissen der Einbauteile mit den Hohlkörperwänden erfolgt besonders rasch, wobei weder Vorwärmzeiten noch Abkühlzeiten erforderlich sind. Verfärbungen im Bereich der Schweissstellen treten praktisch nicht auf.

Nach dem Verfahren sind Hohlkörper und Einbauteile aus praktisch allen thermoplastisch verarbeitbaren Kunststoffen miteinander verschweissbar, beispielsweise Hohlkörper und Einbauteile aus Olefinpolymerisaten, wie Polyethylen oder Polypropylen; Styrolpolymerisate, wie Polystyrol oder Copolymere des Styrols; Chlor enthaltende Polymerisate, wie Polyvinylchlorid; Polyamide, Polymethylmethacrylat, Polycarbonat, sowie Mischungen dieser Polymerisate.

Diese Kunststoffe können die üblichen Zusatzstoffe, wie Füllstoffe, Pigmente, Antistatika, Stabilisatoren, Flammschutzmittel oder Gleitmittel sowie faserige Substanzen in Form von Matten, Vliesen, Filzen oder Geweben aus Glas-, Kohlenstoff- oder Kunststoff-Fasern enthalten.

Die erfindungsgemässe Vorrichtung besteht aus Ultraschall-Generator, Konvertern, Schweisssonotroden und Schweissamboss und ist derart aufgebaut, dass insgesamt zwei oder mehrere, im Abstand zueinander angeordnete Schweisssonotroden vorgesehen sind, die mit einem hakenförmig ausgebildeten Schweissamboss in Wirkverbindung stehen.

Weitere vorteilhafte Ausgestaltungen der Vorrichtung nach der Erfindung sind Gegenstand der Unteransprüche 4 bis 6.

Im folgenden wird die Erfindung unter Hinweis auf die Zeichnungen näher erläutert.

Es zeigt:

Figur 1 einen Querschnitt durch einen Hohlkörper mit einem Einbauteil in Form einer Zwischenwand sowie Teile der Vorrichtung zur Befestigung der Zwischenwand,

Figur 2 eine Draufsicht der Darstellung nach Figur 1 mit teilweise geschnittenem Oberboden des Hohlkörpers,

Figur 3 und

Figur 4 die Verfahrensschritte zum Befestigen einer Zwischenwand in zwei Ansichten,

Figur 5 eine Seitenansicht eines hakenförmig ausgebildeten Schweissambosses,

Figur 6 eine Ausführungsform im Querschnitt mit vergrössertem Wirkungsbereich des Schweissambosses,

Figur 7 eine Draufsicht der Darstellung nach Figur 6 und

Figur 8 einen der Figur 1 entsprechenden Querschnitt, jedoch durch eine andere Ausführungsform.

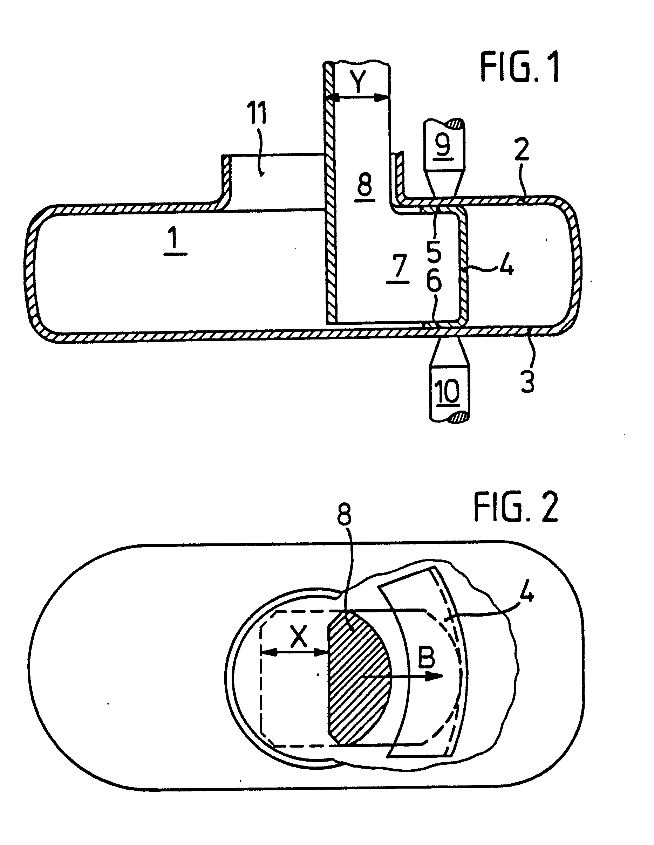

In den Darstellungen gemäss Fig. 1 und Fig. 2 ist der Hohlkörper mit (1) bezeichnet. Zwischen der Oberwand (2) und dem Boden (3) des Hohlkörpers ist ein Einbauteil angeordnet. Das Einbauteil ist als Zwischenwand (4) ausgebildet und hat zwei Flansche (5) und (6), die sowohl mit der Oberwand (2) als auch mit dem Boden (3) durch Ultraschall-Schweissung verbunden werden. Die entsprechende Schweisseinrichtung besteht im wesentlichen aus einem Ultraschall-Generator, Konvertern (in den Zeichnungen nicht dargestellt), Schweisssonotroden (9) und (10) und einem Schweissamboss (8). Für die Herstellung der Schweissverbindungen wird der Amboss (8) in das Innere des Hohlkörpers (1) eingebracht, wobei der Kopf (7) des Ambosses zur Aufnahme des Einbauteils bzw. der Zwischenwand (4) und zum Unterstützen der beiden Flansche (5) und (6) dient. Der Kopf (7) wirkt somit als Widerlager für die gegen die Hohlkörperaussenwände gerichteten Schweisssonotroden (9) und (10). Die hakenförmige Gestalt des Schweissambosses (8) erlaubt nach seinem Einführen durch die Öffnung (11) eine seitliche Verschiebung, um den Abstand X in Pfeilrichtung B, so dass die Zwischenwand (4) an einer nicht durch die Öffnung (11) durchbrochenen Stelle des Hohlkörpers durch den Kopf (7) des Ambosses (8) unterstützt und befestigt werden kann.

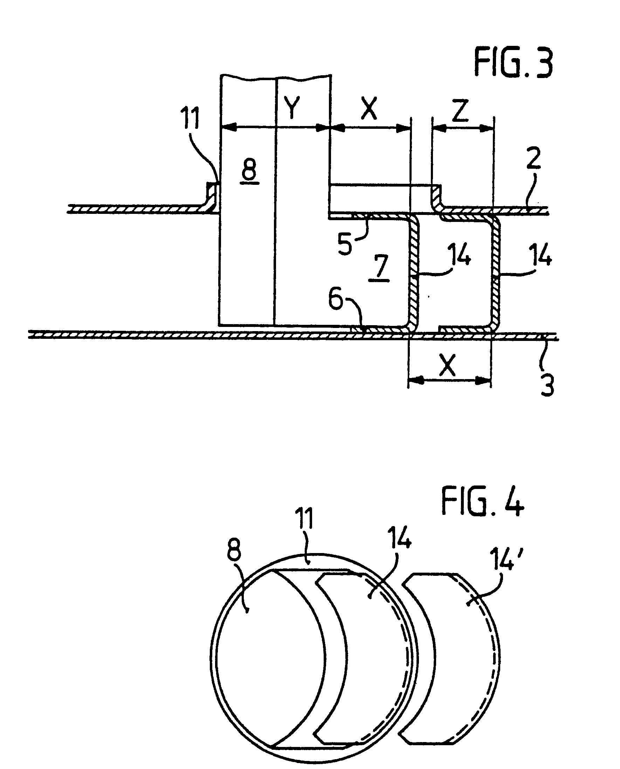

Während die Zwischenwand (4) nach den Figuren 1 und 2 infolge ihrer Abmessungen nicht durch die Öffnung (11) in den Hohlkörper eingebracht werden kann, ist die Zwischenwand (14) gemäss Fig. 3 und 4 so gestaltet, dass sie, auf den Kopf (7) des Ambosses (8) aufgesteckt, mit dem Amboss (8) zusammen durch die Öffnung (11) hindurch in das Hohlkörperinnere eingebracht und nach einer Seitenverschiebung um den Weg X in ihre endgültige Position (14') zur Durchführung der Befestigungsschweissung gebracht werden kann.

Die Grösse des Verschiebweges X und damit der Abstand Z der Zwischenwand (4) bzw. (14) vom Rand der Öffnung (11) hängt im wesentlichen von der Grösse der Öffnung (11) und von dem durch das Mass Y mitbestimmten Querschnitt am Amboss (8) ab.

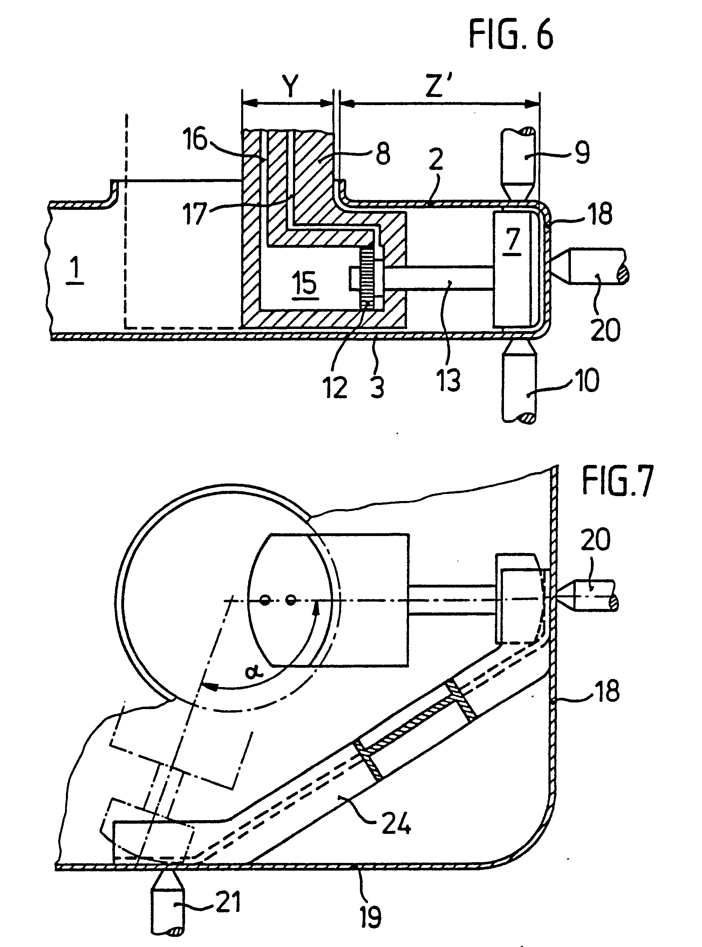

Der Abstand Z (Fig. 3) kann auf Z' vergrössert werden, wenn der Amboss (8) mit einer Einrichtung zum Verschieben des Kopfes (7) gegenüber dem Ambosskörper ausgestattet ist. Als Beispiel einer solchen Einrichtung zeigt Fig. 6 einen mit einem Druckmittel betätigten Kolben (12) mit einer Kolbenstange (13), an der der Kopf (7) befestigt ist. Der Kolben (12) ist in einem Zylinder (15) geführt. Die Verschiebung des Kolbens in seine beiden Endlagen bewirkt ein Druckmittel (Flüssigkeit, Gas), das wahlweise durch eine der beiden Zuführleitungen (16, 17) gegen die beiden Arbeitsflächen des Kolbens geleitet wird.

Der Amboss (8) kann, je nach Gestalt der Zwischenwand (4) gegenüber dem Hohlkörper (1) neben einer Seitenverschiebung auch eine Winkelbewegung — Winkel α — ausführen (Fig. 7) und so das Befestigen einer Zwischenwand (24) an mehreren Stellen des Hohlkörpers (1) ermöglichen. So ist es möglich, die Zwischenwand (24) nicht nur mit der Oberwand (2) und/oder dem Boden (3) des Hohlkörpers, sondern auch mit wenigstens einer seiner Seitenwände (18, 19) zu verbinden. Die Schweisssonotroden (10, 20, 21) zeigen die möglichen Verbindungsstellen.

Der Querschnitt der Zwischenwand (4, 14, 24, 34) richtet sich nach den Aufgaben der Zwischenwand und nach der Lage der Befestigungsstelle. Während die Zwischenwände (4) und (14) einen U-förmigen Querschnitt mit den beiden Flanschen (5) und (6) bilden, ist der Querschnitt der Zwischenwand (24) teils U-, teils doppel-T-förmig. Die Zwischenwand (34) wiederum hat einen winkelförmigen Querschnitt, an den die beiden Flansche (35) und (36) angefügt sind. Auch ein derart ausgebildetes Einbauteil kann — auf dem Kopf (7) des Ambosses (8) sitzend — mit dem Amboss in das Hohlkörperinnere eingeführt werden, wenn beispielsweise an den Flansch (35) eine Haltenase (33) angefügt wird. Weitere Ausführungsformen des Einbauteils bzw. der Zwischenwand richten sich nach den jeweiligen Anforderungen.

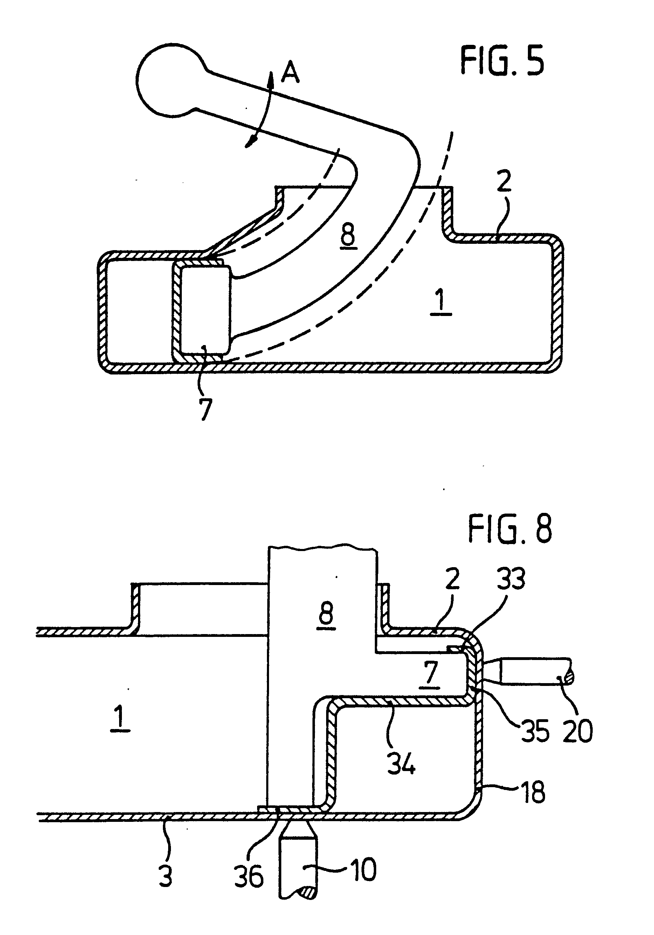

Der Kopf (7) des Ambosses (8) kann nicht nur durch geradlinige Bewegungen in den Hohlkörper eingeführt werden. Wenn es die Gestalt von Hohlkörper und Einbauteil zulassen, ist auch ein bewegungstechnisch besonders einfaches Einschwenken des Kopfs (7) in das Hohlkörperinnere möglich (Fig. 5). Pfeilrichtung A deutet hierbei die Schwenkrichtung an.

**Patentansprüche**

1. Verfahren zum Befestigen von Einbauteilen in Hohlkörpern aus thermoplastischen Kunststoffen, bei dem die Einbauteile (4, 14, 24, 34) vor oder nach der endgültigen Formgebung der Hohlkörper (1) in diese eingebracht und durch Ultraschallenergie mit den Hohlkörperwänden verbunden werden, dadurch gekennzeichnet, dass die Einbauteile (4, 14, 24, 34) vom Kopf (7) eines Schweissambosses (8) in der Schweissposition gehalten und die Schweissverbindungen durch zwei oder mehrere von aussen über verschiedene Wände (2, 3, 18, 19) des Hohlkörpers (1) gegen den innenliegenden Amboss wirkende Schweisssonotroden (9, 10, 20, 21) hergestellt werden.

2. Verfahren nach Anspruch 1, dadurch gekennzeichnet, dass die Einbauteile (4, 14, 24, 34) auf den Kopf (7) des Schweissambosses (8) aufgesetzt und zusammen mit dem Amboss in den Hohlkörper (1) eingebracht und in Schweissposition verschoben werden.

3. Vorrichtung zur Durchführung des Verfahrens nach den Ansprüchen 1 und 2, bestehend aus Ultraschall-Generator, Konvertern, Schweisssonotroden (9, 10, 20, 21) und Schweissamboss (8), dadurch gekennzeichnet, dass insgesamt zwei oder mehrere, im Abstand zueinander angeordnete Schweisssonotroden (9, 10, 20, 21) vorgesehen sind, die mit einem hakenförmig ausgebildeten Schweissamboss (8) in Wirkverbindung stehen.

4. Vorrichtung nach Anspruch 3, dadurch gekennzeichnet, dass der Schweissamboss (8) verschiebbar und/oder schwenkbar ist.

5. Vorrichtung nach den Ansprüchen 3 und 4, dadurch gekennzeichnet, dass der Schweissamboss (8) an seinem freien, hakenförmig abgebogenen Ende einen unabhängig verschiebbaren Kopf (7) trägt.

6. Vorrichtung nach Anspruch 5, dadurch gekennzeichnet, dass der Kopf (7) hydraulisch oder pneumatisch verschiebbar ist.

## Claims

1. A process for fastening inserts inside hollow articles made of thermoplastics, the inserts (4, 14, 24, 34) being introduced into the hollow article (1) before or after its final shaping, and attached to the walls of the hollow article by ultrasonic energy, wherein the inserts (4, 14, 24, 34) are held in the welding position by the head (7) of an anvil (8), and the welds are made by two or more ultrasonic horns (9, 10, 20, 21) which bear, from the outside, via different walls (2, 3, 18, 19) of the hollow article (1), against the anvil inside the hollow article.

2. A process as claimed in claim 1, wherein the inserts (4, 14, 24, 34) are placed over the head (7) of the anvil (8), introduced into the hollow article (1) together with the anvil, and pushed into the welding position.

3. An apparatus for carrying out a process as claimed in claims 1 and 2, consisting of an ultrasonic generator, converters, ultrasonic horns (9, 10, 20, 21) and an anvil (8), wherein there is provided a total of two or more spatially arranged ultrasonic horns (9, 10, 20, 21) which cooperate with a hook-shaped anvil (8).

4. An apparatus as claimed in claim 3, wherein the anvil (8) is displaceable and/or pivotable.

5. An apparatus as claimed in claims 3 and 4, wherein the anvil (8) has, at its free, hook-shaped end, an independently displaceable head (7).

6. An apparatus as claimed in claim 5, wherein the head (7) can be displaced hydraulically or pneumatically.

## Revendications

1. Procédé de fixation de pièces encastrées dans des corps creux en matière thermoplastique, selon lequel les pièces encastrées (4, 14, 24, 34) sont introduites dans le corps creux (1) avant ou après la mise en forme finale de celui-ci et reliées aux parois du corps creux par une énergie ultra-sonique, caractérisé par le fait que les pièces encastrées (4, 14, 24, 34) sont tenues en position de soudage par la tête (7) d'une enclume de soudage (8) et les liaisons de soudage et les soudures sont effectuées par deux ou plus de deux sonotrodes de soudage (9, 10, 20, 21) extérieures, agissant contre l'enclume intérieure par l'intermédiaire de diverses parois (2, 3, 18, 19) du corps creux (1).

2. Procédé selon la revendication 1, caractérisé par le fait que les pièces encastrées (4, 14, 24, 34) sont appliquées sur la tête (7) de l'enclume de soudage (8) puis introduites dans le corps creux (1) et amenées en position de soudage avec l'enclume.

3. Dispositif pour mettre en oeuvre le procédé selon les revendications 1 et 2, constitué d'un générateur d'ultrasons, d'un convertisseur, de sonotrodes de soudage (9, 10, 20, 21) et d'une enclume de soudage (8), caractérisé par le fait que sont prévues au total deux ou plus de deux sonotrodes de soudage, écartées les unes des autres (9, 10, 20, 21) qui coopèrent avec une enclume de soudage (8) en · forme de crochet.

4. Dispositif selon la revendication 3, caractérisé par le fait que l'enclume de soudage (8) est coulissante et/ou pivotante.

5. Dispositif selon les revendications 3 et 4, caractérisé par le fait que l'enclume de soudage (8) porte, à son extrémité libre, repliée en forme de crochet, une tête (7) déplaçable indépendamment.

6. Dispositif selon la revendication 5, caractérisé par le fait que la tête (7) est déplaçable hydrauliquement ou pneumatiquement.

FIG.1

11

Y

9

2

8

1

5
6
7
4

3

10

FIG. 2

8

X

B

4

FIG.3

FIG.4

0 146 753

FIG. 5

FIG. 8

FIG. 6

FIG.7